# EUROPEAN PATENT APPLICATION

(11) **EP 1 406 461 A1**
(43) Date of publication of application: **07.04.2004**
(21) Application number: 03021668.3
(22) Date of filing: 29.09.2003
(51) Int. Cl.: H04Q 7/32

(54) **Automatic vocoder selection in digital mobile radios**

(30) Priority: 04.10.2002 IT MI20022101
(71) Applicant: PROD-EL S.p.A., 20132 Milano (IT)
(72) Inventor: Zani, Nicola, 25075 Nave (BS) (IT); Garue, Elena, 20144 Milano (IT); Carelli, Alessandro, 20127 Milano (IT)
(74) Representative: Cioni, Carlo

(57) **Abstract**

Method for the selection of the vocoder to be used for a given portion of a conversation in a digital mobile system comprising at least two terminal devices each of then comprising at least two vocoders characterized by the following operations:
j) the elaboration of a data memory related to a list of vocoders, including a list of identification codes (VOC_ID);
k) the elaboration of a program to read and interpret the cited identification codes;
l) the insertion of the cited data memory and of the associated program in the memory of each terminal in the system;
m) the exchange between the terminals involved in the communication of the information related to the VOC_ID codes;
n) the acquisition and storing in the memory of a device of the information described in step d;
o) the computation, for communication purposes, of the set of all common VOC_Ids;
p) the selection of a VOC_ID from the set of all common VOC_Ids;
q) the exchange between terminals of the information comprising the VOC_ID selected at step g;
r) the beginning of the conversation.

## Description

### Technical field

The following invention deals with digital mobile radio and it refers to a procedure for the selection of the vocoder to be used for a portion of a conversation in a mobile radio system.

### Background of the invention

In most digital mobile radios intended for professional applications, a unique voice coder (vocoder) is usually prescribed to implement voice calls. For example, the North American standard APCO (Association of Public-Safety Communication Officers) Project 25 supports the IMBE (Improved Multi Band Excitation) vocoder, performing source coding of speech at 4.4 kb/s.

Technology is now leading towards systems capable of supporting multiple vocoders in the same terminal, each vocoder having a different set of characteristics.

For example, GSM (Global System for Mobile communications) allows up to three vocoders in the same mobile phone. Notwithstanding, a limitation in this system is that only one vocoder can work at a time: more precisely, the subscriber must select the preferred vocoder *a priori* and this choice cannot be modified once the call is in progress.

A recent advance in the field of digital mobile radios is AMR (Adaptive Multi Rate) technology, which, for example, will be used in UMTS (Universal Mobile Telecommunications System). UMTS mobile phones are based on a single AMR vocoder capable of supporting multiple voice coding rates. The AMR vocoder changes its rate automatically as a function of speaker activity; this way, the bandwidth required for voice transmission should be minimized. Systems like these can modify the voice-coding rate at each speech frame, inserting proper signalling into the voice frame specifying the rate itself.

A new protocol for digital mobile communications called DIIS (Digital Interchange of Information and Signalling) is in the course of development within ETSI (European Telecommunications Standards Institute). DIIS is based on Frequency-Division Multiple Access (FDMA) of the radio channel and it is intended primarily for the PMR (Professional Mobile Radio) market.

The DIIS protocol prescribes a default vocoder for voice calls, but it also includes an interface capable of supporting additional vocoders. The main advantage of this characteristic is to enable the DIIS protocol to benefit from potential future improvements in voice coding technology, rather than be constrained to this default vocoder. Furthermore, this characteristic permits selection of the best vocoder for the on-going speech conversation.

### Description of the invention

The following invention applies to digital mobile systems comprising at least two vocoders; in more detail, the invention defines a procedure to select the vocoder to be used for a portion of a conversation, the method being applicable both at call set-up and when the call is already in progress; in the latter case, switching between different vocoders shall not cause interruptions to the synthesized speech flow.

The invention describes a method for the selection of the vocoder to be used for a given portion of a conversation in a digital mobile system comprising at least two terminal devices, each of them comprising at least two vocoders, the procedure itself being the following steps:
a) the elaboration of a data memory related to a list of vocoders, including a list of identification codes (VOC_ID);
b) the elaboration of a program to read and interpret the cited identification codes;
c) the insertion of the cited data memory and of the associated program in the memory of each terminal in the system;
d) the exchange between the terminals involved in the communication of the information related to the VOC_ID codes;
e) the acquisition and storing in the memory of a device of the information described in step d;
f) the computation, for communication purposes, of the set of all common VOC_IDs;
g) the selection of a VOC_ID from the set of all common VOC_IDs;
h) the exchange between terminals of the information comprising the VOC_ID selected at step g;
i) the beginning of the conversation.

For a better understanding of the method considered in this invention, the method itself is described below using the following terms:
- Calling (terminal): the terminal originating the voice call;
- Called (terminal): the terminal addressed by the voice call;
- Call: the overall exchange, between the Called and Calling terminals, of data packets comprising coded speech and signalling information.

A Call generally commences when a defined signalling packet (Call Set-Up) is sent; a Call generally ends when the voice activity of both involved parties is over.

It is important to note that, when a half-duplex Call is in progress, both the Calling and the Called terminals can take in turn the role of "speaker" or "listener".

The vocoder negotiation process, carried out at the call set-up phase, shall therefore comprise the following steps:
1. The Calling terminal sends to the Called terminal a signalling message including the list of the VOC_ID installed in the Calling terminal;
2. The Called terminal stores in a memory the list defined at step 1;
3. The Called terminal decides which VOC_ID are common to the Calling and the Called terminal;
4. the Called terminal selects one VOC_iD from the set of the common VOC_IDs computed at step 3;
5. the Called terminal sends a signalling message (Acknowledge) to the Called terminal, encompassing the VOC_ID chosen as described at step 4.

When the negotiation phase is complete, the speech conversation can commence with the vocoder selected by the Called terminal.

On the basis of the method described in this invention, Called terminals are also permitted to request a vocoder change also after call set-up, i.e. once the speech conversation is in progress. To change vocoder in the course of a call, the Called terminal, when taking the role of "listener", must wait for a signalling opportunity towards the Calling terminal, it must then send a signalling message specifying the VOC_ID code of the new preferred vocoder, the new VOC_ID code being chosen amongst the set of all common VOC_IDs.

The new preferred vocoder is then activated automatically by the Called and the Calling terminals, incurring a fixed common delay with respect to the timing of the vocoder change request.

When the Calling terminal has the "listener" role and wishes to request a vocoder change, an additional step in the method must have occurred:
the Called terminal shall send to the Calling terminal an additional signalling message specifying the set of common VOC_IDs determined at step 3. This may be done in the reply to the Call Set-Up packet or in the first opportunity to send signalling packets.

In this way, even the Calling terminal may submit a request for a vocoder change even in the course of the Call. A vocoder change request can also be submitted also by the terminal having the role of "speaker" by sending a signalling message specifying the VOC_ID code of the new vocoder. Both terminals will simultaneously activate the new vocoder, possibly with a fixed delay, as previously described.

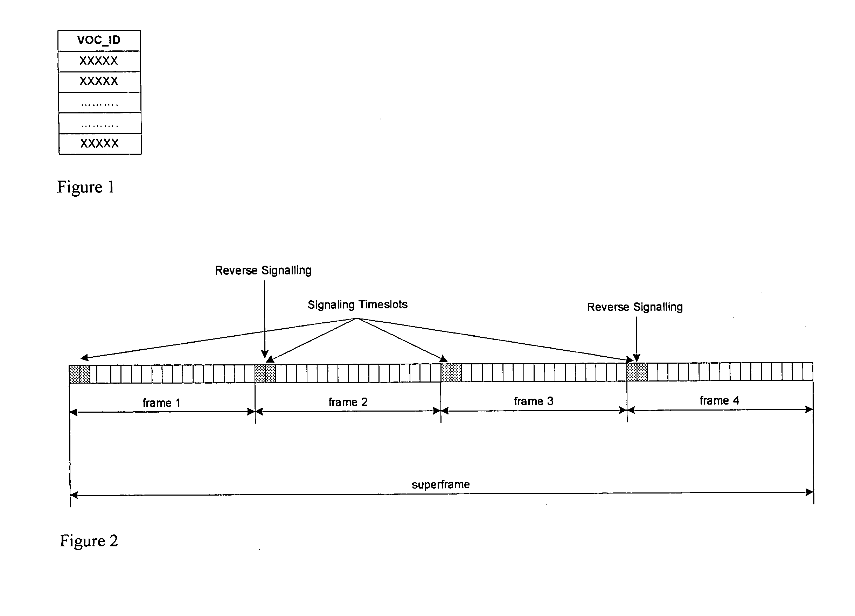

Fundamental to the present invention is the creation of a data base encompassing a list of the valid vocoders, the memory itself made up by a list of identification codes (the cited VOC_IDs): this data base is a fundamental part of the invention and is used in the method to select the vocoder to be used in a portion of a conversation. A possible representation of this is depicted in Figure 1.

Equally important are the creation of a program to read and interpret the identification codes defined earlier and the insertion of this memory and program into the memory of each terminal; these operations are well understood by those who are skilled in the art.

A preferred embodiment of the present invention is applicable to the DIIS protocol. DIIS transmission is divided into basic time units called Timeslots; 18 adjacent Timeslots form a Frame: 4 adjacent frames form a Superframe. The first two Timeslots in each Frame are devoted to signalling information (in the Forward or Reverse direction); the remaining 16 Timeslots can be used to convey digitized voice in a half-duplex transmission mode.

DIIS supports two system configurations:
- Centralized Mode, using intelligent network infrastructure;
- Non-centralized Mode, operating without network infrastructure or employing only simple repeaters.

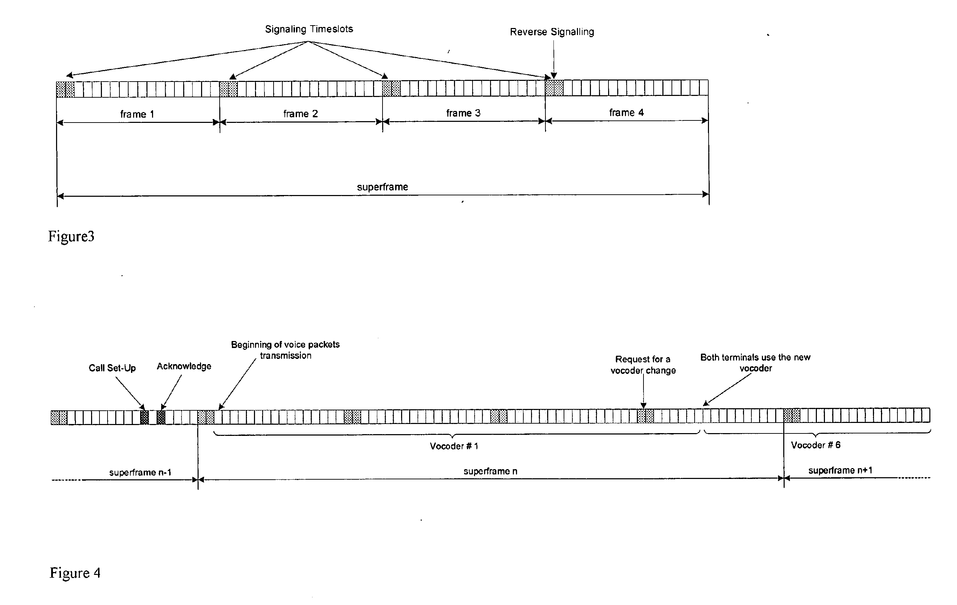

In the course of a Call, depending on the system configuration supported, the "listening" terminal has one (Figure 2) or two (Figure 3) signalling opportunities in every Superframe. These signalling opportunities are called Reverse Signalling.

Suppose, for example, that in the course of a Call, channel conditions deteriorate and a number of voice frames are lost. To counteract this situation, the listening terminal could send a request for a vocoder change in the Reverse Signalling Timeslots, thereby calling for a lower rate vocoder. A lower rate vocoder could in fact allow a more robust error control coding of voice frames, therefore enabling the system to be more resilient to channel disturbances (Figure 4).

If channel conditions improve, the listening terminal may submit a subsequent change request in the Reverse Signalling to select a higher rate vocoder affording better quality of service.

The procedure described is very useful in PMR systems, which are often required to provide emergency calls for public-safety purposes. The present invention - and the implied capability to perform vocoder changes in the course of a call - can deliver to users a better overall quality of service.

## Claims

1. Method for the selection of the vocoder to be used for a given portion of a conversation in a digital mobile system comprising at least two terminal devices each of then comprising at least two vocoders **characterized by** the following operations:
a) the elaboration of a data memory related to a list of vocoders, including a list of identification codes (VOC_ID);
b) the elaboration of a program to read and interpret the cited identification codes;
c) the insertion of the cited data memory and of the associated program in the memory of each terminal in the system;
d) the exchange between the terminals involved in the communication of the information related to the VOC_ID codes;
e) the acquisition and storing in the memory of a device of the information described in step d;
f) the computation, for communication purposes, of the set of all common VOC_Ids;
g) the selection of a VOC_ID from the set of all common VOC_Ids;
h) the exchange between terminals of the information comprising the VOC_ID selected at step g;
i) the beginning of the conversation.

2. Method for the selection of the vocoder to be used for a given portion of a conversation according to claim 1 wherein the operations according to the items from d) to h) are performed at the call set-up phase.

3. Method for the selection of the vocoder to be used for a given portion of a conversation according to claims 1 and 2 wherein the operations according to the items from d) to h) are furtherly performed one the speech conversation is in progress.

4. Method for the selection of the vocoder to be used for a given portion of a conversation according to claim 1 when particularly applied to the DHS protocal.

5. Data base encompassing a list of vocoders made up by a list of identification codes to be used in the method for the selection of the vocoder to be used for a given portion of a conversation in a digital mobile system according to claim 1.
